# EUROPEAN PATENT SPECIFICATION

(11) **EP 4 147 800 B1**
(45) Date of publication and mention of the grant of the patent: **19.02.2025**
(21) Application number: 21842514.8
(22) Date of filing: 13.07.2021
(51) Int. Cl.: F16D 1/08, F16B 21/12, F16C 13/00, B21B 31/08

(54) **IN-SHAFT KEY ALIGNING AND LOCKING DEVICE**
VORRICHTUNG ZUM AUSRICHTEN UND VERRIEGELN EINER PASSFEDER IN EINER WELLE
DISPOSITIF D' ALIGNEMENT ET DE VERROUILLAGE DE CLÉ DANS UN ARBRE

(30) Priority: 13.07.2020 CN 202010669102
(43) Date of publication of application: 15.03.2023
(73) Proprietor: Dalian Field Manufacturing Co., Ltd, Dalian, Liaoning 116200 (CN)
(72) Inventor: GAO, Guowu, Dalian, Liaoning 116200 (CN)
(74) Representative: Boult Wade Tennant LLP
(86) International application number: PCT/CN2021/105912
(87) International publication number: WO 2022/012497

(56) References cited:
- CN-A- 111 872 129
- CN-U- 205 732 291
- CN-U- 210 816 722
- CN-U- 213 001 834
- CN-Y- 2 500 645
- CN-Y- 2 500 645
- JP-A- H06 238 347
- US-A- 6 109 085
- US-A- 6 109 085

## Description

### TECHNICAL FIELD

The present application relates to a technical field of abutting connection of shafts, and particularly relates to an in-shaft key aligning and locking device.

### BACKGROUND

In the field of modern fully automatic production lines, the technical condition of automatic abutting of joint occurs frequently, especially in the field of steel pipe automatic production line, when the product specification of the production line need to be changed and rollers of the production line need to be replaced. Generally, the rollers that need to be replaced are manually disassembled and replaced one by one, this greatly reduces the production efficiency of the production line. However, if using an automatic roller replacement robot to perform the above roller replacement operation, new difficult technical problems arise that the new roller needs to be accurately docked to the roller shaft in the production line and the transmission key in the roller shaft need to be accurately connected and matched with the key groove in the new roller. Therefore, in order to solve such technical problems so that the automatic robot can be used to replace rollers in the production line so as to improve the production efficiency, the technical solution of the present application provides an in-shaft key aligning and locking device, which can achieve the docking between the roller shaft and the roller.
JP H06 238347A discloses a roll spare changing device for performing offline changing of rolls used in cold roll forming and the like, and in particular to a roll spare changing device for use when a roll stand is installed on a sole plate removably mounted on a forming machine bed, and also to a roll with integrated spacer for use when the roll spare changing device is employed.

### SUMMARY

### Technical problems

The embodiments of the present application provide an in-shaft key aligning and locking device, which is suitable for automatic abutting connections of shafts and simple and convenient circumferential positioning between the shafts, especially suitable for automatic positioning and abutting connection between a roller and a roller shaft for the automatic roller replacement performed by a robot in the steel pipe automatic production line, thereby improving the production efficiency of the whole production line. The object is solved by the independent claim. Further embodiments are shown by the dependent claims.

### Technical solutions

On one aspect, an in-shaft key aligning and locking device includes a first abutting shaft 1a, a second abutting shaft 2a, a replacement roller 3a and a push arm 4a, the replacement roller 3a is sleeved on the first abutting shaft 1a, an abutting shaft end of the first abutting shaft 1a is provided with a matching shaft hole 1a1, and an abutting shaft end of the second abutting shaft 2a is provided with a matching shaft shoulder 2a1, the matching shaft shoulder 2a1 can be inserted into the matching shaft hole 1a1 to achieve axial abutting connection between the first abutting shaft 1a and the second abutting shaft 2a, characterized in that, a positioning boss 1a2 is further arranged in the matching shaft hole 1a1, an end of the matching shaft shoulder 2a1 is further provided with a positioning groove 2a2, when the matching shaft shoulder 2a1 is inserted into the matching shaft hole 1a1 and the first abutting shaft 1a is rotated, the positioning boss 1a2 can synchronously rotate with the first abutting shaft 1a and be inserted into the positioning groove 2a2 to achieve circumferential positioning of the first abutting shaft 1a and the second abutting shaft 2a, and after the positioning, the replacement roller 3a can be pushed to be accurately guided onto the second abutting shaft 2a from the first abutting shaft 1a so as to achieve the replacement of the replacement roller 3a.

According to one aspect of the embodiments of the present disclosure, the positioning boss 1a2 is arranged on an end face lala at a bottom of the matching shaft hole 1a1, and can extend or retract relative to the end face lala; when the positioning boss 1a2 extends, it can be matched with the positioning groove 2a2 to achieve the circumferential positioning of the first abutting shaft 1a and the second abutting shaft 2a, and when the positioning boss 1a2 retracts relative to the end face lala, the circumferential positioning of the first abutting shaft 1a and the second abutting shaft 2a is released.

According to one aspect of the embodiments of the present disclosure, a sliding hole 1a1b is further provided at the end face lala, a sliding shaft 1a1c is further provided in the sliding hole lalb, the positioning boss 1a2 is arranged on an end surface of the sliding shaft 1a1c, and the sliding shaft 1a1c can carry the positioning boss 1a2 to extend or retract in the sliding hole 1a1b relative to the end face lala.

According to one aspect of the embodiments of the present disclosure, a pressure spring lalt is further provided in the sliding hole 1a1b, the pressure spring lalt is arranged between the sliding shaft 1a1c and the sliding hole 1a1b, and a support shaft 1a1z is further arranged on an end surface of the sliding shaft 1a1c on a side facing the pressure spring lalt, the pressure spring lalt is sleeved on the support shaft 1a1z and applies an outward pushing force to the sliding shaft 1a1c under the support of the support shaft 1a1z.

According to one aspect of the embodiments of the present disclosure, a circumferential positioning system consists of the sliding hole lalb, the sliding shaft 1a1c, the positioning boss 1a2 and the pressure spring lalt, and multiple groups of circumferential positioning systems are provided in the matching shaft hole 1a1, and are asymmetrically arranged with respect to a center of rotation of the first abutting shaft 1a on the end face lala, so as to ensure that the second abutting shaft 2a and the first abutting shaft 1a are circumferentially positioned relative to each other merely at one orientation.

According to one aspect of the embodiments of the present disclosure, a circumferential positioning system consisting of the sliding hole lalb, the sliding shaft 1a1c, the positioning boss 1a2 and the pressure spring lalt, is arranged at a center of the end face lala, the positioning boss 1a2 is arranged on the end surface of the sliding shaft 1a1c and is eccentric with respect to a center of rotation of the first abutting shaft 1a, the sliding hole 1a1b is formed into a polygonal concave hole, the sliding shaft 1a1c is formed into a polygonal long shaft, and the sliding shaft 1a1c can extend or retract but cannot rotate in the sliding hole 1a1b.

According to one aspect of the embodiments of the present disclosure, a circumferential positioning system consisting of the sliding hole lalb, the sliding shaft 1a1c, the positioning boss 1a2 and the pressure spring lalt, is arranged in a center of the end face lala, and the positioning boss 1a2 is arranged on the end surface of the sliding shaft 1a1c and is eccentric with respect to a center of rotation of the first abutting shaft 1a; the first abutting shaft 1a is provided with a through hole 1ab, a stop shaft 1ac is provided in the through hole 1ab, the sliding shaft 1a1c is further provided with a long hole 1a1d for guiding, the stop shaft 1ac is inserted into the long hole 1a1d for guiding to prevent the sliding shaft 1a1c from rotating relative to the sliding hole lalb, and the sliding shaft 1a1c can extend or retract but cannot rotate in the sliding hole 1a1b.

According to one aspect of the embodiments of the present disclosure, the positioning boss 1a2 is further provided with a boss slope 1a2x, the positioning groove 2a2 is further provided with a groove slope 2a2x, the boss slope 1a2x and the groove slope 2a2x match each other to achieve rapid guiding and insertion of the positioning boss 1a2 into the positioning groove 2a2 during the circumferential positioning of the first abutting shaft 1a and the second abutting shaft 2a.

### BRIEF DESCRIPTION OF THE DRAWINGS

The features, advantages and technical effects of exemplary embodiments of the present application will be described below with reference to the accompanying drawings.

Description of reference numerals: first abutting shaft 1a, matching shaft hole 1a1, end face lala, sliding hole lalb, sliding shaft 1a1c, guide long hole 1a1d, support shaft 1a1z, pressure spring lalt, positioning boss 1a2, boss slope 1a2x, through hole 1ab, stop shaft 1ac, second abutting shaft 2a, matching shaft shoulder 2a1, positioning groove 2a2, groove slope 2a2x, replacement roller 3a, pull hook groove 3a1, push arm 4a, pull hook 4a1, second sliding key 5, and first sliding key 6.
Fig. 1 is a schematic diagram of a basic structure of the first embodiment of the present disclosure.
Fig. 2 is a schematic diagram of the axial abutting connection of the first embodiment of the present disclosure.
Fig. 3 is a schematic diagram of the circumferential alignment diagram of the first embodiment of the present disclosure.
Fig. 4 is a schematic diagram showing that the replacement roller 3a is pushed onto the second abutting shaft 2a in the first embodiment of the present disclosure.
Fig. 5 is a schematic diagram showing that the first abutting shaft 1a is separated from the second abutting shaft 2a in the first embodiment of the present disclosure.
Fig. 6 is a schematic diagram of a boss slope 1a2x and a groove slope 2a2x of the present disclosure.
Fig. 7 is a schematic diagram of a basic structure of the second embodiment of the present disclosure.
Fig. 8 is a schematic diagram of the abutting connection of the second embodiment of the present disclosure.
Fig. 9 is a left view schematic diagram of a basic structure of a first abutting shaft 1a in the second embodiment of the present disclosure.
Fig. 10 is a structural diagram of the third embodiment of the present disclosure.
Fig. 11 is a left view schematic diagram of a basic structure of a first abutting shaft 1a in the third embodiment of the present disclosure.

In the accompanying drawings, the same components use the same reference numerals. The accompanying drawings are not drawn to actual scale.

### BEST EMBODIMENTS OF THE PRESENT DISCLOSURE

The implementations of the present disclosure are further described in detail below in combination with the accompanying drawings and embodiments. The detailed description of the following embodiments and accompanying drawings are used to illustrate the principle of the present disclosure by example, but cannot be used to limit the scope of the present disclosure, that is, the present disclosure is not limited to the described preferred embodiments, and the scope of the present disclosure is defined by the claims.

In the description of embodiments of the present disclosure, it should be noted that, unless otherwise stated, "vertical" and "parallel" are not only absolute in mathematical sense, and can be understood as "roughly vertical" and "roughly parallel".

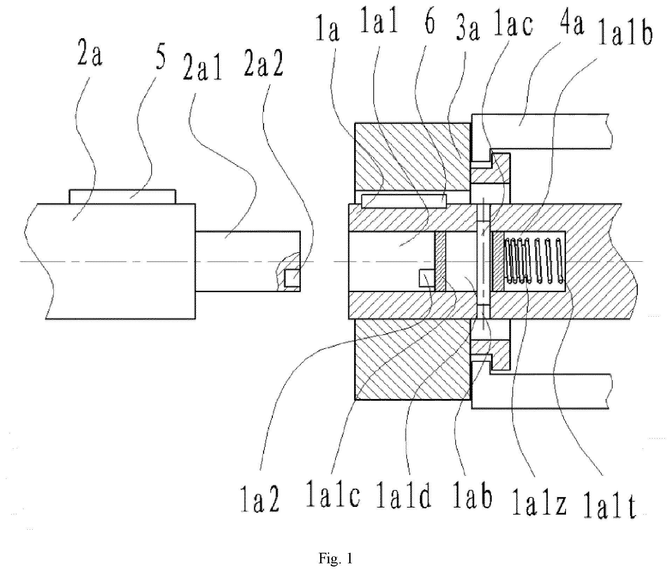

Fig. 1 is a schematic diagram of a basic structure according to a first embodiment of the present disclosure.

As shown in Fig. 1, the embodiment provides an in-shaft key aligning and locking device, which can easily and quickly achieve axial and circumferential positioning between two shafts, thereby achieving rapid replacement of rollers in an automatic production line. The technical features of the specific implementation include a first abutting shaft 1a, a second abutting shaft 2a, a replacement roller 3a and a push arm 4a, the first abutting shaft 1a has a same diameter as the second abutting shaft 2a, the first abutting shaft 1a is provided with a first sliding key 6, and the second abutting shaft 2a is provided with a second sliding key 5. The push arm 4a is a push and pull rod, which can be used to push or pull the replacement roller 3a to achieve the position change of the replacement roller 3a. The replacement roller 3a is a rolling device used for producing finished products in the production line, and is a roll shaped part that is symmetrical around a center of rotation. The replacement roller 3a is further provided with a shaft hole, in which a key groove is provided, the shaft hole can be sleeved on the first abutting shaft 1a, and the key groove can be matched with the first sliding key 6 on the first abutting shaft 1a to achieve relative fixing of the replacement roller 3a and the first abutting shaft 1a in a radial and circumferential position. Further, the replacement roller 3a is further provided with a pull hook groove 3a1 on one side, and the push arm 4a is further provided with a pull hook 4a1, the pull hook 4a1 can hook into the pull hook groove 3a1 to push or pull the replacement roller 3a and change the position of the replacement roller 3a.

The abutting shaft end of the first abutting shaft 1a is further provided with a matching shaft hole 1a1, the abutting shaft end of the second abutting shaft 2a is provided with a matching shaft shoulder 2a1, the diameter of the matching shaft shoulder 2a1 is the same as that of the matching shaft hole 1a1, and the matching shaft shoulder 2a1 can be inserted into the matching shaft hole 1a1 to achieve axial abutting connection between the first abutting shaft 1a and the second abutting shaft 2a; a positioning boss 1a2 is further provided in the matching shaft hole 1a1, an end of the matching shaft shoulder 2a1 is further provided with a positioning groove 2a2, and when the matching shaft shoulder 2a1 is inserted into the matching shaft hole 1a1 and then the first matching shaft 1a is rotated, the positioning boss 1a2 can synchronously rotate with the first matching shaft 1a and be inserted the positioning groove 2a2 to achieve the circumferential positioning of the first abutting shaft 1a and the second abutting shaft 2a. After positioning, the first sliding key 6 is aligned with the second sliding key 5, and in this case, the pull hook 4a1 of the push arm 4a hooks into the pull hook groove 3a1 and pushes the replacement roller 3a, so that the replacement roller 3a can be accurately guided onto the second abutting shaft 2a from the first abutting shaft 1a to put the replacement roller 3a in place.

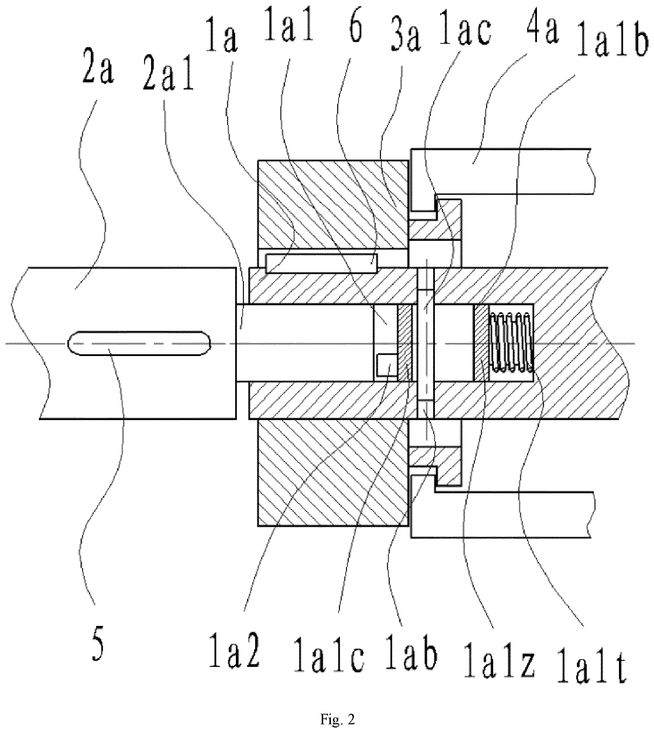

Fig. 2 is a schematic diagram of the axial abutting connection of the first embodiment of the present disclosure.

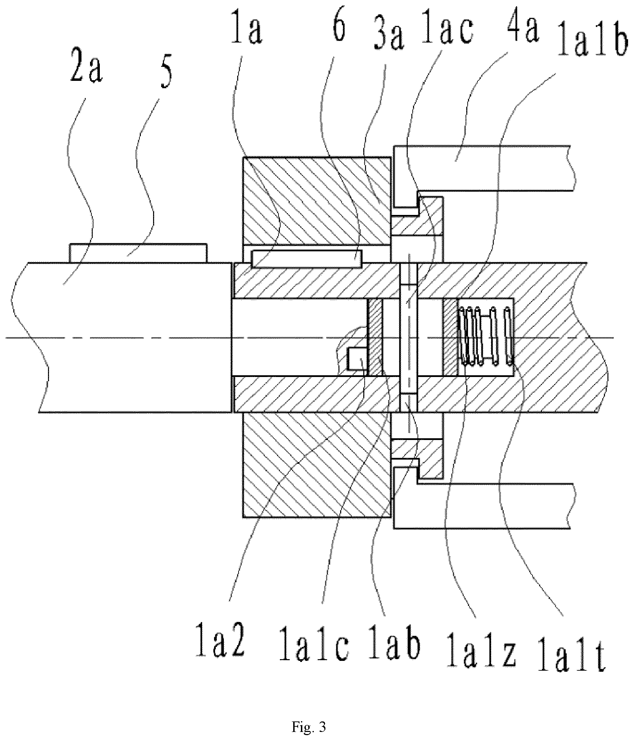

Fig. 3 is a schematic diagram of the circumferential alignment diagram of the first embodiment of the present disclosure.

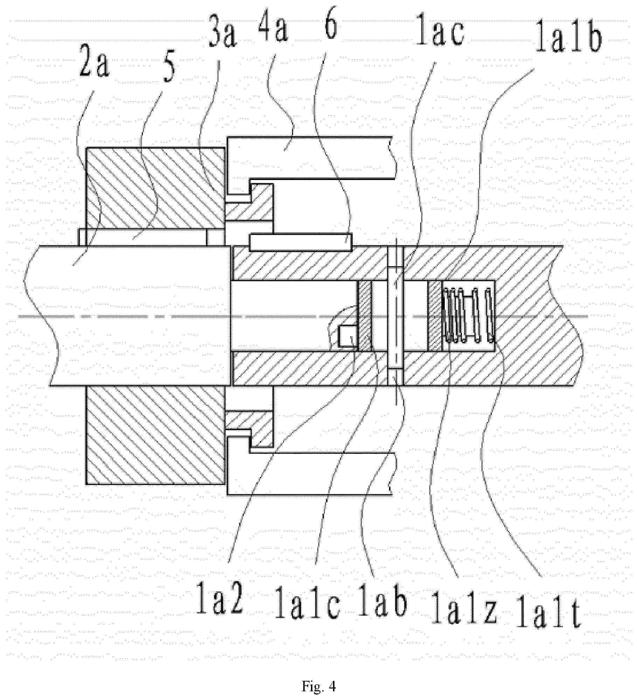

Fig. 4 is a schematic diagram showing that the replacement roller 3a is pushed onto the second abutting shaft 2a in the first embodiment of the present disclosure.

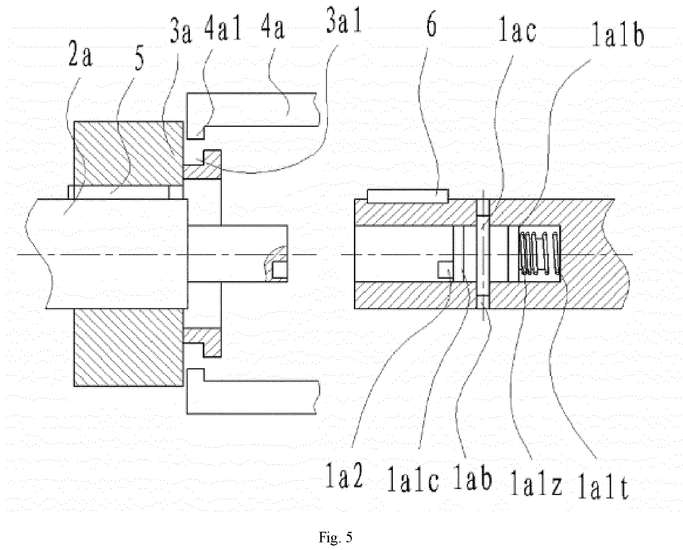

Fig. 5 is a schematic diagram showing that the first abutting shaft 1a is separated from the second abutting shaft 2a in the first embodiment of the present disclosure.

As shown in Fig. 2, Fig. 3, Fig. 4 and Fig. 5, according to one aspect of the first embodiment of the present disclosure, an end face lala is further provided at a bottom of the shaft hole 1a1, a sliding hole 1a1b is provided at the end face lala, a pressure spring lalt is provided in the sliding hole lalb, and a sliding shaft 1a1c is further provided in the sliding hole 1a1b. The positioning boss 1a2 is arranged on an end surface of the sliding shaft 1a1c, the sliding shaft 1a1c can carry the positioning boss 1a2 to extend or retract relative to the end face lala in the sliding hole 1a1b. The pressure spring lalt is arranged between the sliding shaft 1a1c and the sliding hole lalb, an end surface of the sliding shaft 1a1c on a side facing the pressure spring lalt is further provided with a support shaft 1a1z, and the pressure spring lalt is sleeved on the support shaft 1a1z and applies a pushing force to the sliding shaft 1a1c under the support of the support shaft 1a1z. When the positioning boss 1a2 extends, it can match with the positioning groove 2a2 to achieve the circumferential positioning of the first abutting shaft 1a and the second abutting shaft 2a, and when the positioning boss 1a2 retracts relative to the end face lala, the circumferential positioning of the first abutting shaft 1a and the second abutting shaft 2a is released.

According to one aspect of the first embodiment of the present disclosure, a circumferential positioning system, which consists of the sliding hole lalb, the sliding shaft 1a1c, the positioning boss 1a2 and the pressure spring lalt, is arranged at a center of the end face lala, and the positioning boss 1a2 is arranged on the end surface of the sliding shaft 1a1c and is eccentrically arranged relative to the center of rotation of the first abutting shaft 1a. The first abutting shaft 1a is provided with a through-hole 1ab, in which a stop shaft 1ac is provided, the sliding shaft 1a1c is further provided with a long hole 1a1d for guiding, the stop shaft 1ac is inserted into the long hole 1a1d for guiding to prevent the sliding shaft 1a1c from rotating relative to the sliding hole lalb, and the sliding shaft 1a1c can extend or retract but cannot rotate in the sliding hole 1a1b.

According to one aspect of the first embodiment of the present disclosure, the specific working process of the first embodiment is as follows: at first, the first abutting shaft 1a and the second abutting shaft 2a are axially positioned, that is, the first abutting shaft 1a carrying the replacement roller 3a is moved to a position coaxial with the second abutting shaft 2a, and then the first abutting shaft 1a is moved towards the second abutting shaft 2a, the matching shaft hole 1a1 is gradually sleeved onto the matching shaft shoulder 2a1 to achieve the axial positioning of the first abutting shaft 1a and the second abutting shaft 2a, the outer end surface of the positioning boss 1a2 comes into contact with the outer end surface of the matching shaft shoulder 2a1, and the matching shaft shoulder 2a1 presses the positioning boss 1a2 and the sliding shaft 1a1c into the sliding hole 1a1b. Then, the first abutting shaft 1a is rotated, and the rotation of the first abutting shaft 1a will drive the replacement roller 3a and the positioning boss 1a2 to rotate synchronously. When the positioning boss 1a2 and the positioning groove 2a2 are aligned with each other, the pressure spring lalt will push the sliding shaft 1a1c to move outward, and the sliding shaft 1a1c will push the positioning boss 1a2 to insert into the positioning groove 2a2, so that the positioning boss 1a2 and the positioning groove 2a2 are matched and positioned each other and the second sliding key 5 and the first sliding key 6 are aligned with each other in the circumferential position, thereby achieving the circumferential positioning of the first abutting shaft 1a and the second abutting shaft 2a. In this case, the push arm 4a pushes the replacement roller 3a so that the replacement roller 3a slides from the first abutting shaft 1a to the second abutting shaft 2a, achieving the replacement operation for the replacement roller 3a. After the replacement operation is completed, the push arm 4a is separated from the replacement roller 3a, the second abutting shaft 2a is separated from the first abutting shaft 1a, and thus a replacement work cycle is completed.

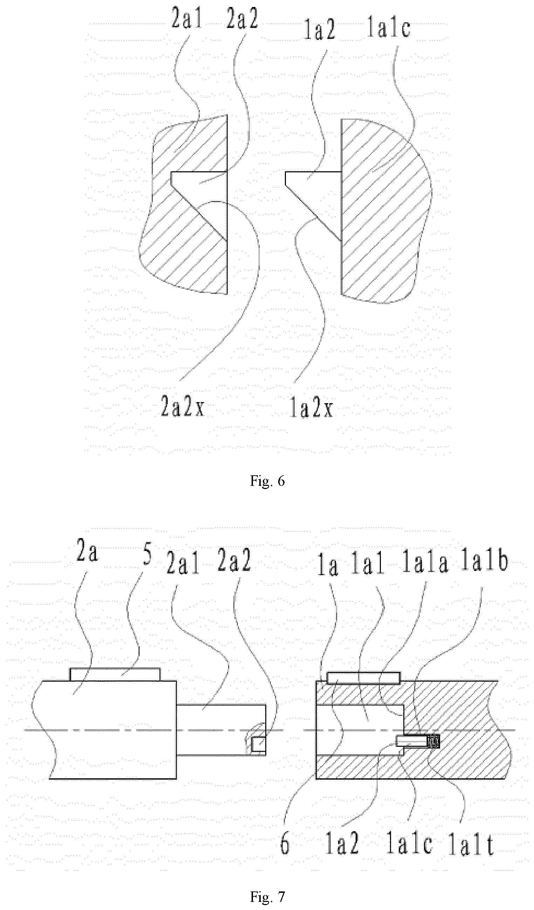

Fig. 7 is a structural diagram of the second embodiment of the present disclosure.

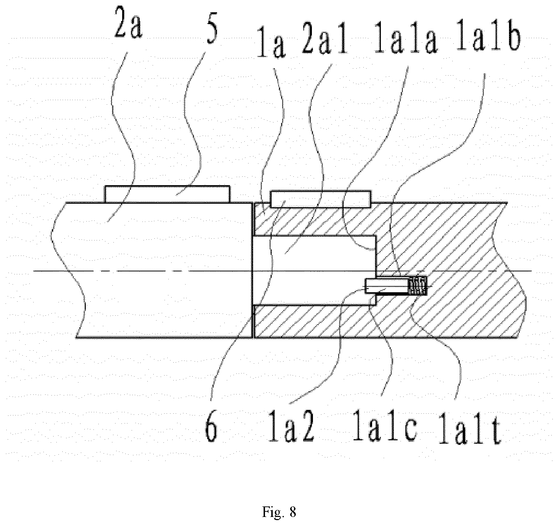

Fig. 8 is a schematic diagram of abutting connection of the second embodiment of the present disclosure.

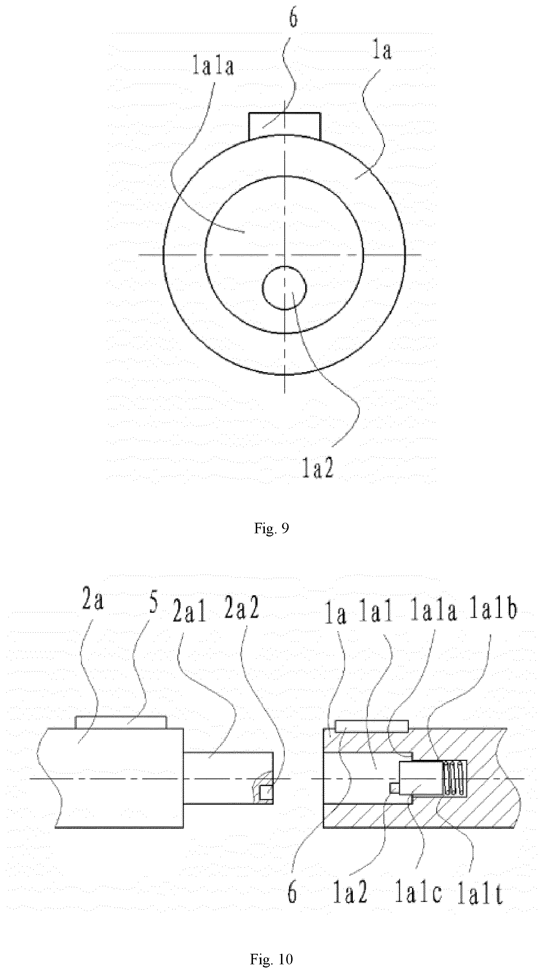

Fig. 9 is a left view schematic diagram of a basic structure of the first abutting shaft 1a in the second embodiment of the present disclosure.

As shown in Fig. 7, Fig. 8 and Fig. 9, according to one aspect of the second embodiment of the present disclosure, the specific distinguishing technical feature different from the first embodiment is that the circumferential positioning system, which consists of the sliding hole lalb, the sliding shaft 1a1c, the positioning boss 1a2 and the pressure spring lalt is arranged on the end face lala, but is eccentric with respect to the center of rotation of the first abutting shaft 1a, the positioning boss 1a2 is arranged on the end surface of the sliding shaft 1a1c and can extend or retract synchronously with the sliding shaft 1a1c in the sliding hole 1a1b relative to the end face lala. The circumferential positioning system including the sliding shaft 1a1c, the positioning boss 1a2 and the pressure spring lalt can further be provided by multiple groups in the matching shaft hole 1a1, and asymmetrically arranged on the end face lala relative to the center of rotation of the first abutting shaft 1a, so as to ensure that the second abutting shaft 2a and the first abutting shaft 1a can be circumferentially positioned relative to each other merely at one orientation.

Fig. 10 is a structural diagram of the third embodiment of the present disclosure.

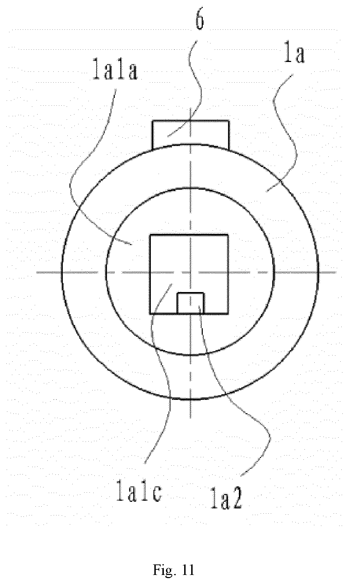

Fig. 11 is a left view schematic diagram of a basic structure of the first abutting shaft 1a in the third embodiment of the present disclosure.

As shown in Fig. 10 and Fig. 11, according to one aspect of the third embodiment of the present disclosure, the specific distinguishing technical feature different from the first embodiment is that the circumferential positioning system which consists of the sliding hole lalb, the sliding shaft 1a1c, the positioning boss 1a2 and the pressure spring lalt is arranged at the center of the end face lala, the positioning boss 1a2 is arranged on the end surface of the sliding shaft 1a1c and is eccentric with respect to the center of rotation of the first abutting shaft 1a, the sliding hole 1a1b is formed into a polygonal concave hole, the sliding shaft 1a1c is formed into a polygonal long axis, and the sliding shaft 1a1c can extend or retract but cannot rotate in the sliding hole 1a1b.

The specific working process of the second embodiment and the third embodiment are the same. The specific working process is as follows: at first, the first abutting shaft 1a and the second abutting shaft 2a are axially positioned, that is, the first abutting shaft 1a carries the replacement roller 3a and is moved to a position coaxial with the second abutting shaft 2a, and then the first abutting shaft 1a is moved toward the second abutting shaft 2a, the matching shaft hole 1a1 is gradually sleeved onto the matching shaft shoulder 2a1, achieving the axial positioning of the first abutting shaft 1a and the second abutting shaft 2a, the outer end surface of the positioning boss 1a2 comes into contact with the outer end surface of the matching shaft shoulder 2a1, and the matching shaft shoulder 2a1 presses the positioning boss 1a2 and the sliding shaft 1a1c into the sliding hole 1a1b. Then, the first abutting shaft 1a is rotated, the rotation of the first abutting shaft 1a will drive the replacement roller 3a and the positioning boss 1a2 to rotate synchronously. When the positioning boss 1a2 and the positioning groove 2a2 are aligned with each other, the pressure spring lalt will push the sliding shaft 1a1c to move outward, the sliding shaft 1a1c will push the positioning boss 1a2 to insert into the positioning groove 2a2 to achieve the matching and positioning of the positioning boss 1a2 and the positioning groove 2a2, and the second sliding key 5 and the first sliding key 6 will be aligned with each other in the circumferential position, thereby achieving the circumferential positioning of the first abutting shaft 1a and the second abutting shaft 2a. In this case, the push arm 4a pushes the replacement roller 3a so that the replacement roller 3 slides from the first abutting shaft 1a to the second abutting shaft 2a, achieving the replacement operation for the replacement roller 3a. After the replacement operation is completed, the push arm 4a is separated from the replacement roller 3a, the second abutting shaft 2a is separated from the first abutting shaft 1a, and a replacement work cycle is completed.

Fig. 6 is a schematic diagram of a boss slope 1a2x and a groove slope 2a2x of the present disclosure.

As shown in Fig. 6, according to one aspect of the embodiment of the present disclosure, the positioning boss 1a2 can be further provided with a boss slope 1a2x, the positioning groove 2a2 can be further provided with a groove slope 2a2x, and the boss slope 1a2x and the groove slope 2a2x can be matched with each other to achieve the rapid guiding and insertion of the positioning boss 1a2 to the positioning groove 2a2 during the circumferential positioning of the first abutting shaft 1a and the second abutting shaft 2a.

It should be understood that the description of the specific embodiments of the present disclosure in the specification is exemplary and should not be interpreted as an improper limitation on the scope of protection of the present disclosure. The scope of protection of the present disclosure is defined by the claims.

## Claims

1. An in-shaft key aligning and locking device, comprising a first abutting shaft (1a), a second abutting shaft (2a), a replacement roller (3a) and a push arm (4a), the replacement roller (3a) is sleeved on the first abutting shaft (1a), the push arm (4a) is a push and pull rod and is configured to push or pull the replacement roller (3a) to achieve a position change of the replacement roller (3a), an abutting shaft end of the first abutting shaft (1a) is provided with a matching shaft hole (1a1), and an abutting shaft end of the second abutting shaft (2a) is provided with a matching shaft shoulder (2a1), the matching shaft shoulder (2a1) can be inserted into the matching shaft hole (1a1) to achieve axial abutting connection between the first abutting shaft (1a) and the second abutting shaft (2a),
**characterized in that**, a positioning boss (1a2) is further arranged in the matching shaft hole (1a1), an end of the matching shaft shoulder (2a1) is further provided with a positioning groove (2a2), when the matching shaft shoulder (2a1) is inserted into the matching shaft hole (1a1) and the first abutting shaft (1a) is rotated, the positioning boss (1a2) can synchronously rotate with the first abutting shaft (1a) and be inserted into the positioning groove (2a2) to achieve circumferential positioning of the first abutting shaft (1a) and the second abutting shaft (2a), and after the positioning, the replacement roller (3a) can be pushed by the push arm (4a) to be accurately guided onto the second abutting shaft (2a) from the first abutting shaft (1a) so as to achieve the replacement of the replacement roller (3a).

2. The in-shaft key aligning and locking device according to claim 1, **characterized in that**, the positioning boss (1a2) is arranged on an end face (1a1a) at a bottom of the matching shaft hole (1a1), and can extend or retract relative to the end face (lala); when the positioning boss (1a2) extends, it can be matched with the positioning groove (2a2) to achieve the circumferential positioning of the first abutting shaft (1a) and the second abutting shaft (2a), and when the positioning boss (1a2) retracts relative to the end face (lala), the circumferential positioning of the first abutting shaft (1a) and the second abutting shaft (2a) is released.

3. The in-shaft key aligning and locking device according to claim 2, **characterized in that**, a sliding hole (1a1b) is further provided at the end face (lala), a sliding shaft (1a1c) is further provided in the sliding hole (1a1b), the positioning boss (1a2) is arranged on an end surface of the sliding shaft (1a1c), and the sliding shaft (1a1c) can carry the positioning boss (1a2) to extend or retract in the sliding hole (1a1b) relative to the end face (1a1a).

4. The in-shaft key aligning and locking device according to claim 3, **characterized in that**, a pressure spring (1a1t) is further provided in the sliding hole (1a1b), the pressure spring (1a1t) is arranged between the sliding shaft (1a1c) and the sliding hole (1a1b), and a support shaft (1a1z) is further arranged on an end surface of the sliding shaft (1a1c) on a side facing the pressure spring (lalt), the pressure spring (1a1t) is sleeved on the support shaft (1a1z) and applies an outward pushing force to the sliding shaft (1a1c) under the support of the support shaft (1a1z).

5. The in-shaft key aligning and locking device according to claim 4, **characterized in that**, a circumferential positioning system consists of the sliding hole (1a1b), the sliding shaft (1a1c), the positioning boss (1a2) and the pressure spring (lalt), and multiple groups of the circumferential systems are provided in the matching shaft hole (1a1), and are asymmetrically arranged with respect to a center of rotation of the first abutting shaft (1a) on the end face (lala), so as to ensure that the second abutting shaft (2a) and the first abutting shaft (1a) are circumferentially positioned relative to each other merely at one orientation.

6. The in-shaft key aligning and locking device according to claim 4, **characterized in that**, a circumferential positioning system consisting of the sliding hole (1a1b), the sliding shaft (1a1c), the positioning boss (1a2) and the pressure spring (lalt), is arranged at a center of the end face (lala), the positioning boss (1a2) is arranged on the end surface of the sliding shaft (1a1c) and is eccentric with respect to a center of rotation of the first abutting shaft (1a), the sliding hole (1a1b) is formed into a polygonal concave hole, the sliding shaft (1a1c) is formed into a polygonal long shaft, and the sliding shaft (1a1c) can extend or retract but cannot rotate in the sliding hole (1alb).

7. The in-shaft key aligning and locking device according to claim 4, **characterized in that**, a circumferential positioning system consisting of the sliding hole (1a1b), the sliding shaft (1a1c), the positioning boss (1a2) and the pressure spring (lalt), is arranged at a center of the end face (lala), and the positioning boss (1a2) is arranged on the end surface of the sliding shaft (1a1c) and is eccentric with respect to a center of rotation of the first abutting shaft (1a); the first abutting shaft (1a) is provided with a through hole (1ab), a stop shaft (1ac) is provided in the through hole (1ab), the sliding shaft (1a1c) is further provided with a long hole (1a1d) for guiding, the stop shaft (1ac) is inserted into the long hole (1a1d) for guiding to prevent the sliding shaft (1a1c) from rotating relative to the sliding hole (1a1b), and the sliding shaft (1a1c) can extend or retract but cannot rotate in the sliding hole (1a1b).

8. The in-shaft key aligning and locking device according to any of claim 5, claim 6 and claim 7, **characterized in that**, the positioning boss (1a2) is further provided with a boss slope (1a2x), the positioning groove (2a2) is further provided with a groove slope (2a2x), the boss slope (1a2x) and the groove slope (2a2x) match each other to achieve rapid guiding and insertion of the positioning boss (1a2) into the positioning groove (2a2) during the circumferential positioning of the first abutting shaft (1a) and the second abutting shaft (2a).

## Patentansprüche

1. Vorrichtung zum Ausrichten und Verriegeln einer Passfeder in einer Welle, die eine erste Andockwelle (1a), eine zweite Andockwelle (2a), eine Ersatzrolle (3a) und einen Schubarm (4a) umfasst, wobei die Ersatzrolle (3a) auf der ersten Andockwelle (1a) gelagert ist, der Schubarm (4a) eine Schub- und Zugstange ist und zum Schieben oder Ziehen der Ersatzrolle (3a) ausgebildet ist, um eine Positionsänderung der Ersatzrolle (3a) zu erreichen, ein Andockwellenende der ersten Andockwelle (1a) mit einem passenden Wellenloch (1a1) versehen ist, und ein Andockwellenende der zweiten Andockwelle (2a) mit einer passenden Wellenschulter (2a1) versehen ist, wobei die passende Wellenschulter (2a1) in das passende Wellenloch (1a1) einführbar ist, um eine axiale Andockverbindung zwischen der ersten Andockwelle (1a) und der zweiten Andockwelle (2a) zu erreichen,
**dadurch gekennzeichnet, dass** ein Positionierungsvorsprung (1a2) ferner in dem passenden Wellenloch (1a1) angeordnet ist, ein Ende der passenden Wellenschulter (2a1) ferner mit einer Positionierungsnut (2a2) versehen ist, wobei beim Einführen der passenden Wellenschulter (2a1) in das passende Wellenloch (1a1) und Drehen der ersten Andockwelle (1a) der Positionierungsvorsprung (1a2) synchron mit der ersten Andockwelle (1a) drehbar ist und in die Positionierungsnut (2a2) einführbar ist, um eine umlaufende Positionierung der ersten Andockwelle (1a) und der zweiten Andockwelle (2a) zu erreichen, und nach dem Positionieren die Ersatzrolle (3a) durch den Schubarm (4a) geschoben werden kann, um von der ersten Andockwelle (1a) exakt auf die zweite Andockwelle (2a) geführt zu werden, um den Austausch der Ersatzrolle (3a) zu erreichen.

2. Vorrichtung zum Ausrichten und Verriegeln einer Passfeder in einer Welle nach Anspruch 1, **dadurch gekennzeichnet, dass** der Positionierungsvorsprung (1a2) an einem stirnseitigen Ende (1a1a) an einem Boden des passenden Wellenlochs (1a1) angeordnet ist und relativ zu dem stirnseitigen Ende (1a1a) ausfahrbar oder zurückziehbar ist; beim Ausfahren des Positionierungsvorsprungs (1a2) dieser mit der Positionierungsnut (2a2) in Eingriff bringbar ist, um die umlaufende Positionierung der ersten Andockwelle (1a) und der zweiten Andockwelle (2a) zu erreichen, und beim Zurückziehen des Positionierungsvorsprungs (1a2) relativ zu dem stirnseitigen Ende (1a1a) die umlaufende Positionierung der ersten Andockwelle (1a) und der zweiten Andockwelle (2a) freigegeben wird.

3. Vorrichtung zum Ausrichten und Verriegeln einer Passfeder in einer Welle nach Anspruch 2, **dadurch gekennzeichnet, dass** an dem stirnseitigen Ende (1a1a) ferner ein Gleitloch (1a1b) vorgesehen ist, wobei in dem Gleitloch (1a1b) ferner eine Gleitwelle (1a1c) vorgesehen ist, der Positionierungsvorsprung (1a2) an einer Endfläche der Gleitwelle (1a1c) angeordnet ist und die Gleitwelle (1a1c) den Positionierungsvorsprung (1a2) antreiben kann, um sich in dem Gleitloch (1a1b) relativ zu dem stirnseitigen Ende (1a1a) auszufahren oder zurückzuziehen.

4. Vorrichtung zum Ausrichten und Verriegeln einer Passfeder in einer Welle nach Anspruch 3, **dadurch gekennzeichnet, dass** eine Druckfeder (1a1t) in dem Gleitloch (1a1b) vorgesehen ist, wobei die Druckfeder (1a1t) zwischen der Gleitwelle (1a1c) und dem Gleitloch (1alb) angeordnet ist, und eine Stützwelle (1a1z) ferner an einer Endfläche der Gleitwelle (1a1c) auf einer der Druckfeder (1a1t) zugewandten Seite angeordnet ist, die Druckfeder (1a1t) auf der Stützwelle (1a1z) gelagert ist und eine nach außen gerichtete Druckkraft auf die Gleitwelle (1a1c) unter der Stützung der Stützwelle (1a1z) ausübt.

5. Vorrichtung zum Ausrichten und Verriegeln einer Passfeder in einer Welle nach Anspruch 4, **dadurch gekennzeichnet, dass** ein System zum umlaufenden Positionieren aus dem Gleitloch (1a1b), der Gleitwelle (1a1c), dem Positionierungsvorsprung (1a2) und der Druckfeder (1a1t) besteht und mehrere Gruppen der umlaufenden Systeme in dem passenden Wellenloch (1a1) vorgesehen sind, und asymmetrisch zu einem Drehpunkt der ersten Andockwelle (1a) an dem stirnseitigen Ende (1a1a) angeordnet sind, um sicherzustellen, dass die zweite Andockwelle (2a) und die erste Andockwelle (1a) relativ zueinander nur in einer Ausrichtung umlaufend positioniert sind.

6. Vorrichtung zum Ausrichten und Verriegeln einer Passfeder in einer Welle nach Anspruch 4, **dadurch gekennzeichnet, dass** ein System zum umlaufenden Positionieren bestehend aus dem Gleitloch (1a1b), der Gleitwelle (1a1c), dem Positionierungsvorsprung (1a2) und der Druckfeder (1a1t) mittig am stirnseitigen Ende (1a1a) angeordnet ist, der Positionierungsvorsprung (1a2) an der Endfläche der Gleitwelle (1a1c) angeordnet ist und exzentrisch zu einem Drehpunkt der ersten Andockwelle (1a) ist, das Gleitloch (1a1b) als ein polygonales konkaves Loch ausgebildet ist, die Gleitwelle (1a1c) als eine polygonale lange Welle ausgebildet ist und die Gleitwelle (1a1c) ausfahrbar oder zurückziehbar ist, jedoch in dem Gleitloch (1a1b) nicht drehbar ist.

7. Vorrichtung zum Ausrichten und Verriegeln einer Passfeder in einer Welle nach Anspruch 4, **dadurch gekennzeichnet, dass** ein System zum umlaufenden Positionieren bestehend aus dem Gleitloch (1a1b), der Gleitwelle (1a1c), dem Positionierungvorsprung (1a2) und der Druckfeder (1a1t) mittig am stirnseitigen Ende (1a1a) angeordnet ist, und der Positionierungvorsprung (1a2) an der Endfläche der Gleitwelle (1a1c) angeordnet ist und exzentrisch zu einem Drehpunkt der ersten Andockwelle (1a) ist; die erste Andockwelle (1a) mit einem Durchgangsloch (1ab) versehen ist, eine Anschlagwelle (1ac) in dem Durchgangsloch (1ab) vorgesehen ist, die Gleitwelle (1a1c) ferner mit einem Langloch (1a1d) zur Führung versehen ist, die Anschlagwelle (1ac) in das Langloch (1a1d) zur Führung eingeführt ist, um eine Drehung der Gleitwelle (1a1c) relativ zu dem Gleitloch (1a1b) zu verhindern, und die Gleitwelle (1a1c) ausfahrbar oder zurückziehbar ist, jedoch in dem Gleitloch (1a1b) nicht drehbar ist.

8. Vorrichtung zum Ausrichten und Verriegeln einer Passfeder in einer Welle nach einem der Ansprüche 5, 6 und 7, **dadurch gekennzeichnet, dass** der Positionierungsvorsprung (1a2) ferner mit einer Vorsprungsneigung (1a2x) versehen ist, die Positionierungsnut (2a2) ferner mit einer Nutneigung (2a2x) versehen ist, die Vorsprungsneigung (1a2x) und die Nutneigung (2a2x) einander entsprechen, um eine schnelle Führung und Einführung des Positionierungsvorsprungs (1a2) in die Positionierungsnut (2a2) während der umlaufenden Positionierung der ersten Andockwelle (1a) und der zweiten Andockwelle (2a) zu erreichen.

## Revendications

1. Dispositif d'alignement et de verrouillage de clé inter-arbre, comprenant un premier arbre d'aboutement (1a), un second arbre d'aboutement (2a), un rouleau de remplacement (3a) et un bras de poussée (4a), le rouleau de remplacement (3a) est manchonné sur le premier arbre d'aboutement (1a), le bras de poussée (4a) est une tige de poussée et de traction et est configuré pour pousser ou tirer le rouleau de remplacement (3a) afin de réaliser un changement de position du rouleau de remplacement (3a), une extrémité d'arbre d'aboutement du premier arbre d'aboutement (1a) est pourvue d'un trou d'arbre d'ajustement (1a1), et une extrémité d'arbre d'aboutement du second arbre d'aboutement (2a) est pourvue d'un épaulement d'arbre d'ajustement (2a1), et l'épaulement d'arbre d'ajustement (2a1) peut être inséré dans le trou d'arbre d'ajustement (1a1) pour réaliser une liaison d'aboutement axial entre le premier arbre d'aboutement (1a) et le second arbre d'aboutement (2a),
**caractérisé en ce qu'**un bossage de positionnement (1a2) est disposé en outre dans le trou d'arbre d'ajustement (1a1), une extrémité de l'épaulement d'arbre d'ajustement (2a1) est pourvue en outre d'une rainure de positionnement (2a2), lorsque l'épaulement d'arbre d'ajustement (2a1) est inséré dans le trou d'arbre d'ajustement (1a1) et que le premier arbre d'ajustement (1a) est tourné, le bossage de positionnement (1a2) peut tourner de manière synchrone avec le premier arbre d'aboutement (1a) et être inséré dans la rainure de positionnement (2a2) pour réaliser un positionnement circonférentiel du premier arbre d'aboutement (1a) et du second arbre d'aboutement (2a), et après le positionnement, le rouleau de remplacement (3a) peut être poussé par le bras de poussée (4a) pour être guidé avec précision sur le second arbre d'aboutement (2a) à partir du premier arbre d'aboutement (1a) afin de réaliser le remplacement du rouleau de remplacement (3a).

2. Dispositif d'alignement et de verrouillage de clé inter-arbre selon la revendication 1, **caractérisé en ce que** le bossage de positionnement (1a2) est disposé sur une face d'extrémité (1a1a) au fond du trou d'arbre d'ajustement (1a1), et peut s'étendre ou se rétracter par rapport à la face d'extrémité (1a1a) ; lorsque le bossage de positionnement (1a2) s'étend, il peut être adapté à la rainure de positionnement (2a2) pour réaliser le positionnement circonférentiel du premier arbre d'aboutement (1a) et du second arbre d'aboutement (2a), et lorsque le bossage de positionnement (1a2) se rétracte par rapport à la face d'extrémité (1a1a), le positionnement circonférentiel du premier arbre d'aboutement (1a) et du second arbre d'aboutement (2a) est relâché.

3. Dispositif d'alignement et de verrouillage de clé inter-arbre selon la revendication 2, **caractérisé en ce qu'**un trou de coulissement (1a1b) est prévu en outre à la face d'extrémité (1a1a), un arbre de coulissement (1a1c) est prévu en outre dans le trou de coulissement (1a1b), le bossage de positionnement (1a2) est disposé sur une surface d'extrémité de l'arbre de coulissement (1a1c), et l'arbre de coulissement (1a1c) peut amener le bossage de positionnement (1a2) à s'étendre ou se rétracter dans le trou de coulissement (1a1b) par rapport à la face d'extrémité (1a1a).

4. Dispositif d'alignement et de verrouillage de clé inter-arbre selon la revendication 3, **caractérisé en ce qu'**un ressort de pression (1a1t) est prévu en outre dans le trou de coulissement (1a1b), le ressort de pression (1a1t) est disposé entre l'arbre de coulissement (1a1c) et le trou de coulissement (1a1b), un arbre de support (1a1z) est disposé en outre sur une surface d'extrémité de l'arbre de coulissement (1a1c) sur un côté faisant face au ressort de pression (1a1t), et le ressort de pression (1a1t) est manchonné sur l'arbre de support (1a1z) et applique une force de poussée vers l'extérieur à l'arbre de coulissement (1a1c) sous le support de l'arbre de support (1a1z).

5. Dispositif d'alignement et de verrouillage de clé inter-arbre selon la revendication 4, **caractérisé en ce qu'**un système de positionnement circonférentiel est constitué du trou de coulissement (1a1b), de l'arbre de coulissement (1a1c), du bossage de positionnement (1a2) et du ressort de pression (1a1t), et plusieurs groupes des systèmes circonférentiels sont prévus dans le trou d'arbre d'ajustement (1a1) et sont disposés de manière asymétrique par rapport à un centre de rotation du premier arbre d'aboutement (1a) sur la face d'extrémité (1a1a), afin de s'assurer que le second arbre d'aboutement (2a) et le premier arbre d'aboutement (1a) soient positionnés circonférentiellement l'un par rapport à l'autre simplement selon une seule orientation.

6. Dispositif d'alignement et de verrouillage de clé inter-arbre selon la revendication 4, **caractérisé en ce qu'**un système de positionnement circonférentiel constitué du trou de coulissement (1a1b), de l'arbre de coulissement (1a1c), du bossage de positionnement (1a2) et du ressort de pression (1a1t) est disposé à un centre de la face d'extrémité (1a1a), le bossage de positionnement (1a2) est disposé sur la surface d'extrémité de l'arbre de coulissement (1a1c) et est excentrique par rapport à un centre de rotation de la premier arbre d'aboutement (1a), le trou de coulissement (1a1b) est formé en un trou concave polygonal, l'arbre de coulissement (1a1c) est formé en un arbre long polygonal et l'arbre de coulissement (1a1c) peut s'étendre ou se rétracter mais ne peut pas tourner dans le trou de coulissement (1a1b).

7. Dispositif d'alignement et de verrouillage de clé inter-arbre selon la revendication 4, **caractérisé en ce qu'**un système de positionnement circonférentiel constitué du trou de coulissement (1a1b), de l'arbre de coulissement (1a1c), du bossage de positionnement (1a2) et du ressort de pression (1a1t) est disposé à un centre de la face d'extrémité (1a1a), le bossage de positionnement (1a2) est disposé sur la surface d'extrémité de l'arbre de coulissement (1a1c) et est excentrique par rapport à un centre de rotation de la premier arbre d'aboutement (1a) ; le premier arbre d'aboutement (1a) est pourvu d'un trou traversant (1ab), un arbre d'arrêt (1ac) est prévu dans le trou traversant (1ab), l'arbre de coulissement (1a1c) est pourvu en outre d'un long trou (1a1d) pour un guidage, l'arbre d'arrêt (1ac) est inséré dans le long trou (1a1d) pour un guidage afin d'empêcher l'arbre de coulissement (1a1c) de tourner par rapport au trou de coulissement (1a1b), et l'arbre de coulissement (1a1c) peut s'étendre ou se rétracter mais ne peut pas tourner dans le trou de coulissement (1a1b).

8. Dispositif d'alignement et de verrouillage de clé inter-arbre selon l'une quelconque des revendications 5, 6 et 7, **caractérisé en ce que** le bossage de positionnement (1a2) est pourvu en outre d'une pente de bossage (1a2x), la rainure de positionnement (2a2) est pourvue en outre d'une pente de rainure (2a2x), la pente de bossage (1a2x) et la pente de rainure (2a2x) s'adaptent l'une à l'autre pour réaliser un guidage et une insertion rapides du bossage de positionnement (1a2) dans la rainure de positionnement (2a2) pendant la positionnement circonférentiel du premier arbre butant (1a) et du second arbre d'aboutement (2a).
